# EUROPÄISCHE PATENTSCHRIFT

(11) **EP 0 816 459 B1**
(45) Veröffentlichungstag und Bekanntmachung des Hinweises auf die Patenterteilung: **04.09.2002**
(21) Anmeldenummer: 97109904.9
(22) Anmeldetag: 18.06.1997
(51) Int. Cl.: C09J 7/02, C09J 153/00

(54) **Klebfolienstreifen**
Adhesive tape
Ruban adhésif

(30) Priorität: 04.07.1996 DE 19626870; 01.03.1997 DE 19708366
(43) Veröffentlichungstag der Anmeldung: 07.01.1998
(73) Patentinhaber: Tesa AG, 20253 Hamburg (DE)
(72) Erfinder: Junghans, Andreas, 22457 Hamburg (DE); Lühmann, Bernd, Dr., 22846 Norderstedt (DE)

(56) Entgegenhaltungen:
- EP-A- 0 330 088
- DE-A- 3 331 016
- US-A- 3 787 531
- US-A- 4 024 312
- US-A- 4 379 806

## Beschreibung

Die Erfindung betrifft einen Klebfolienstreifen für eine wiederlösbare Verklebung, der sich durch Ziehen in Richtung der Verklebungsebene rückstandsfrei und beschädigungslos ablösen läßt, sowie dessen Verwendung für derartige Verklebungen.

Hochelastische Klebfolien (der Begriff Klebstoff-Folie wird im nachfolgenden Text synonym verwendet) für wiederlösbare Verklebungen, die durch Ziehen in Richtung der Verklebungsebene wiederlösbar sind, sind bekannt und im Handel unter der Bezeichnung "tesa Power-Strips" erhältlich. Damit hergestellte Verklebungen bieten kraftvollen Halt und lassen sich doch spurlos wieder ablösen ohne Beschädigung des Untergrundes oder der Fügeteile, wie dies in DE 33 31 016 C2 beschrieben ist.

DE 37 14 453, DE 42 22 849, DE 42 33 872, DE 43 39 604, DE 44 28 587, DE 44 31 914 und DE 195 11 288 beschreiben spezielle Ausführungen und Applikationen vorgenannter Klebfolien.

An die in diesen Druckschriften beschriebenen Klebfolien werden hohe Anforderungen gestellt, etwa:
- Für eine einwandfreie Funktion müssen sie eine für die jeweilige Anwendung ausreichende Anfaßklebrigkeit (für leichte Verklebung = geringer Anpreßdruck und für sofortige Belastung) und Verklebungsfestigkeit (während der Applikationsdauer) bieten.
- Für den Ablöseprozeß sind eine hohe Dehnfähigkeit bei gleichzeitig niedriger Dehnspannung und eine im Vergleich zur Ablösekraft (Stripkraft) hohe Reißfestigkeit Voraussetzung.
- Vorteilhaft für den Ablöseprozeß ist eine deutliche Reduzierung der Anfaßklebrigkeit (tack) beim Verstrecken.
- Für längerfristige Verklebungen ist eine entsprechende Alterungsbeständgkeit in der Klebfuge essentiell.
- Bei hohen mechanischen Beanspruchungen (hohe Scher- und Kippscherbelastungen) kann es bei Einsatz ungesättigter Styrolblockcopolymere (Styrol-Isopren-, Styrol-Butadien-Blockcopolymere) zur Ausbildung von Ozonrissen im Klebstoff kommen und damit zum Einreißen der Klebfolien beim Ablöseprozeß oder zum Ablösen des verklebten Geganstandes während der Applikationsdauer.
- Insbesondere bei Verklebungen, welche hohen Scher- und Kippscherbelastungen ausgesetzt sind, ist bei Applikationstemperaturen >ca 35°C eine möglichst hohe Thermoscherfestigkeit für eine ausreichende Verklebungsfestigkeit wesentlich.
- Für viele Anwendungen ist es erwünscht, die Klebfolie zu pigmentieren. Der Einsatz von Pigmenten, z. B. TiO₂ kann sich jedoch insbesondere bei hohen Einsatzkonzentrationen nachteilig auf die Verklebungsfestigkeit auswirken.

Die obengenannten Klebfolien bestehen aus lediglich einer einzigen Klebstoffschicht, welche sämtliche der vorgenannten Eigenschaften für eine Vielzahl von Anwendungsfällen ausreichend erfüllen muß. Eine Variation der Rezeptur der Klebstoffschicht beeinflußt dabei durchweg mehrere der genannten Eigenschaften. Viele Produkteigenschaften sind zudem gegenläufig, einige schließen sich gar weitestgehend aus. Als entsprechend aufwendig erweist sich die Rezeptierung der Klebstoffe, viele Eigenschaftskombinationen lassen sich gar nicht oder nur unzureichend einstellen.

Gegenüber diesem Stand der Technik bestand das Ziel der vorliegenden Erfindung darin, hochelastische Klebfolien zu schaffen, welche eine weitestmöglich unabhängige Steuerung und breite Einstellbarkeit einzelner Produkteigenschaften erlauben. Erreicht wird dies durch Verwendung von Klebfolienlaminaten, welche aus mehreren Klebstoffschichten bestehen. Optional können zwischen den einzelnen Klebstoffschichten Diffusionssperrschichten integriert sein, welche als Diffusionsbarriere für migrierfähige Rezepturbestandteile in benachbarten Klebstoffschichten wirken. Durch den Mehrschichtenaufbau ist es möglich, durch die Variation von z. B. der Zusammensetzung (Rezeptur), der Dicke und der Anzahl der Einzelschichten, die Gesamteigenschaften erfindungsgemäßer Klebfolienlaminate gezielt und unabhängig voneinander zu steuern und damit ein Eigenschaftsspektrum zu erzeugen, welches den bekannten einschichtigen Systemen nicht zugänglich ist. Das Eigenschaftsprofil einzelner Klebfolienschichten ist dabei steuerbar über Menge und Art der verwendeten nicht oder nur gering migrierfähigen Rezepturbestandteile (Polymere, Füllstoffe) und die Schichtstärken der einzelnen Klebstoffschichten. Bei Klebfolien, welche zwischen den einzelnen Klebfolienschichten integrierte Diffusionssperrschichten enthalten, sind die Konzentrationen migrierfähiger Klebfolienbestandteile in sehr weiten Bereichen einstellbar.

Es sind aber auch bereits mehrschichtige Klebstoff-Folien bekannt, welche sich durch Ziehen in Folienlängsrichtung rückstandsfrei von den Verklebungspartnem lösen lassen. Auch diese weisen jedoch wesentliche Nachteile auf:

So beschreibt WO 92/11333 ein durch Ziehen in der Verklebungsebene wiederablösbares Klebeband, welches als Träger eine hochverstreckbare, im wesentlichen nicht rückstellende (nicht kautschukelastische) Folie nutzt, die nach Verstreckung <50% Rückstellvermögen aufweist.

WO 92/11332 beschreibt ein durch Ziehen in der Verklebungsebene wiederablösbares Klebeband, für welches als Träger sowohl eine verstreckbare hoch elastische (kautschukelastische) als auch eine hochverstreckbare, im wesentlichen nicht rückstellende Folie, genutzt werden kann. Als Klebemassen kommen ausschließlich UV-vernetzte Acrylatcopolymere zum Einsatz.

WO 95/06691 beschreibt durch Ziehen in der Verklebungsebene wiederablösbare Klebebänder, welche als Träger einen geschäumten nicht haftklebrigen Folienträger nutzen.

Hochelastische Trägermaterialien, welche als Abmischkomponenten Klebharze oder Weichmacheröle enthalten, werden weder in WO 92/11332 noch in WO 92/11333 noch in WO 94/21157 beschrieben. Hier besteht damit für den Einsatz von Haftklebemassen, die niedermolekulare migrierfähige Bestandteile enthalten, welche in die hochelastischen Trägermaterialien wandern können, eine für die Praxis bedeutende und den möglichen Einsatz begrenzende Lücke.

Schließlich werden in US 4,024,312 hochverstreckbare Klebfolien beschrieben, welche einen Träger aus hochelastischen, thermoplastisch verarbeitbaren Styrolblockcopolymeren besitzen. Der Träger ist wenigstens einseitig mit einer Haftklebemasse beschichtet. Die verwendeten Haftkleber nutzen entweder Polyisopren (z. B. Naturkautschuk) oder die auch für das Trägermaterial eingesetzten Synthesekautschuke auf Styrolblockcopolymerbasis in Abmischung mit Klebharzen und ggf. weiteren Abmischkomponenten. Die Klebebänder können leicht durch Verstreckung parallel zur Verklebungsfläche vom Haftgrund entfernt werden. Der Träger dieser Klebfolien wird dabei als "basically nontacky" (Sp. 1, Z. 10) beschrieben, obgleich er Harze zugemischt enthalten kann. Demgemäß werden diese Harze auch als solche beschrieben, die mit den A-Blöcken der ABA-Blockcopolymeren assoziieren (Sp. 2, Z. 11-16) und mit diesen verträglich sind (Sp. 3, Z. 10-22). Auch der verwendete Haftkleber kann Harze, nämlich Klebharze, enthalten, die mit den B-Blöcken der ABA-Blockcopolymeren assoziieren (Sp. 3, Z. 58-63).

Wenngleich Produkte gemäß US 4,024,312 für manche Anwendungen ausreichend sein mögen, so haben sie doch für die normale Praxis den gravierenden Nachteil, daß die beiden Arten von Harzen insbesondere bei höheren Temperaturen infolge ihrer relativ niedrigen Molmassen migrieren und sich zwischen Träger und Klebmasse verteilen, so daß sich keine konstanten Klebeeigenschaften erzielen lassen.

Solche Selbstklebebänder haben keine konstanten Produkteigenschaften: mechanische Festigkeiten des Trägers und Eigenschaften der verwendeten Haftklebemassen werden durch die Diffusion der Harze irreversibel verändert. Eine gezielte Einstellung und Steuerung der Produkteingenschaften wie für technische Verklebungen essentiell, ist damit nicht möglich.

Aufgabe der Erfindung war es demgegenüber, Klebfolien zu schaffen, die derartige Nachteile nicht oder zumindest nicht in dem Umfang aufweisen, und dennoch die unbestrittenen Vorteile dieses Standes der Technik nicht aufgeben.

Demgemäß betrifft die Erfindung Klebfolienstreifen, wie sie in den Ansprüchen näher gekennzeichnet sind, insbesondere einen Klebfolienstreifen für eine wieder lösbare Verklebung, der sich durch Ziehen in Richtung der Verklebungsebene rückstandsfrei und beschädigungslos ablösen läßt, mit einem Schichtaufbau aus einer elastischen Trägerschicht, die einseitig oder beidseitig mit einer Klebstoffschicht versehen ist, dadurch gekennzeichnet, daß sowohl die Trägerschicht als auch die Klebstoffschicht(en) als Basispolymere Styrolblockcopolymere enthalten, abgemischt mit Klebharzen, welche mit dem Elastomerblock der verwendeten Styrolblockcopolymeren verträglich sind.

Bevorzugt sind dabei solche Klebfolienstreifen, die dadurch gekennzeichnet sind, daß die Mengenanteile der Klebharze in der Trägerschicht und der/den Klebstoffschicht(en) derart sind, daß über die Anwendungszeit der Klebfolienstreifen nur geringe Konzentrationsänderungen in den einzelnen Schichten eintreten.

Ebenso solche, die dadurch gekennzeichnet sind, daß die Trägerschicht und die Klebstoffschicht(en) die selben Klebharze enthalten.

Ebenso solche, die dadurch gekennzeichnet sind, daß die Mengenanteile der Styrolblockcopolymeren in der Trägerschicht und der/den Klebstoffschicht(en) 15-75, insbesondere 30 - 60, bevorzugt 35 - 55 Gew.-% betragen, und die Mengenanteile der Klebharze in diesen Schichten 15 - 75, insbesondere 30 - 65, bevorzugt 35 - 60 Gew.-% betragen.

Ebenso solche, die dadurch gekennzeichnet sind, daß es sich bei den Klebharzen um Kolophonium oder seine Derivate, aliphatische, cycloaliphatische oder aromatenmodifizierte aliphatische oder aromatenmodifizierte cycloaliphatische Klebharze, insbesondere um Ester von teilhydriertem Kolophonium mit Erweichungspunkten von + 70 bis + 125°C oder für thermisch aktivierbare Systeme um Kolophoniumderivate mit Erweichungspunkten bis zu + 160°C handelt.

Ebenso solche, die dadurch gekennzeichnet sind, daß weitere Abmischkomponenten in der Trägerschicht und der/den Klebstoffschicht(en) enthalten sind, insbesondere Weichmacher, Flüssigharze, Füllstoffe, Alterungsschutzmittel und/oder weitere Polymere.

Ebenso solche, die dadurch gekennzeichnet sind, daß die Mengenanteile der weiteren zwischen den einzelnen Klebstoffschichten migrierfähigen Abmischkomponenten (Weichmacher, Flüssigharze. Alterungsschutzmittel etc) in der Trägerschicht und der/den Klebstoffschicht(en) derart sind, daß über die Anwendungszeit der Klebfolienstreifen nur geringe Konzentrationsänderungen in den einzelnen Schichten eintreten und insbesondere bis zu 40 Gew.-% betragen.

Ebenso solche, die dadurch gekennzeichnet sind, daß die Trägerschicht und die Klebstoffschicht(en) die selben weiteren zwischen den einzelnen Klebstoffschichten migrierfähigen Abmischkomponenten enthalten.

Ebenso solche, die dadurch gekennzeichnet sind, daß die Trägerschicht beidseitig mit einer Klebstoffschicht versehen ist.

Ebenso solche, die dadurch gekennzeichnet sind, daß sich zwischen Trägerschicht und Klebstoffschichten integrierte Sperrschichten befinden, welche als Diffusionsbarriere für migrierfähige Klebfolienbestandteile wirken, welche den Einsatz migrierfähiger Rezepturbestandteile auch in stark unterschiedlichen Einsatzkonzentrationen in den durch die Diffusionsbarriere getrennten Schichten erlauben.

Ebenso solche, die dadurch gekennzeichnet sind, daß er an einem oder mehrerer seiner Enden Anfasser zum Ziehen in Richtung der Verklebungsebene aufweist.

Ebenso solche, die dadurch gekennzeichnet sind, daß seine Klebstoffschicht(en) durch Abdeckpapier oder -folie geschützt ist.

Erfindungsgemäß sind damit die niedermolekularen migrierfähigen Rezepturbestandteile derart in die einzelnen Schichten eingebaut, daß nur eine begrenzte Änderung der Anteile dieser Verbindungen in den einzelnen Schichten über die Applikationszeit der Klebstoff-Folien auftreten kann. Erhältlich sind auf diese Weise Klebstoff-Folien für wiederlösbare Verklebungen, welche gegenüber dem Stand der Technik wesentlich erweiterte und neue Anwendungsmöglichkeiten erschließen. Befinden sich zwischen benachbarten Schichten erfindungsgemäßer Klebfolien keine Diffusionssperrschichten, so enthalten alle Klebstoffschichten vorzugsweise die selben niedermolekularen Bestandteile und dies in Mengenanteilen, die nur geringe Änderungen der Konzentrationen innerhalb der einzelnen Schichten während der Fertigung und im nachfoglenden Gebrauch der Klebebänder zulassen. Eine Migration wie bei Produkten gemäß US 4,024,312 ist damit erfindungsgemäß ausgeschlossen. Klebfolien, welche zwischen benachbarten Schichten Diffusionssperrschichten enthalten erlauben den Einsatz migrierfähiger Rezepturbestandteile auch in stark unterschiedlichen Einsatzkonzentrationen.

Erfindungsgemäße Klebstoff-Folien bestehen aus mehreren Schichten. Als Basispolymere finden für alle Schichten Styrolblockcopolymere Anwendung. Geeignete Styrolblockcopolymere enthalten Polymerblöcke aus Polystyrol und Polyisopren und/oder Polybutadien und/oder deren Hydrierungsprodukte Ethylen/Butylen bzw. Ethylen/ Propylen. Erfindungsgemäß eingesetzt werden können lineare Zwei-, Drei- oder Multiblockcopolymere, radiale oder sternförmige Blockcopolymere sowie Gemische derselben insbesondere auch Systeme, welche Elastomerblöcke unterschiedlichen Typs innerhalb eines Makromoleküls enthalten (z. B. Kraton Tacky G; Firma Shell). Erfindungsgemäße Styrolblockcopolymere können in geringem Umfang weitere Comonomere, z. B. Maleinsäureanhydrid, enthalten. Typische Einsatzkonzentrationen für die Styrolblockcopolymere liegen im Bereich zwischen 15Gew.% und 75Gew.%, bevorzugt im Bereich zwischen 30Gew.% und 60Gew.%, besonders bevorzugt im Bereich zwischen 35Gew.% und 55Gew.%.

Als Klebrigmacher sind u. a. geeignet: Kolophonium und seine Derivate, aliphatische, cycloaliphatische, aromatenmodifizierte aliphatische, aromatische und phenolmodifizierte Klebharze um nur einige zu nennen. Einsatzkonzentrationen der Harze liegen typischerweise im Bereich zwischen 15Gew.% und 75Gew.%, bevorzugt im Bereich 30Gew.% und 65Gew.%, besonders bevorzugt im Bereich zwischen 35Gew.% und 60Gew.%. Bevorzugt eingesetzt werden im Falle der Verwendung von Kolophonium und dessen Derivate Ester von teilhydriertem Kolophonium mit Erweichungspunkten zwischen +70°C und +125°C (Ring and Ball softening point). Für thermisch aktivierbare Systeme auch Kolophoniumderivate mit Erweichungspunkten von bis zu ca +160°C. Im Falle von Klebstoff-Folien, welche zwischen benachbarten Schichten Sperrschichten enthalten, kann der Polymergehalt von innenliegenden Klebstoff-Folienschichten bis zu 100% betragen.

Weitere Abmischkomponenten umfassen Weichmacheröle und Flüssigharze (Einsatzkonzentrationen zwischen 0 und max. ca 30Gew.%), Füllstoffe (verstärkende und nicht verstärkende), z. B. Siliziumdioxid, insbesondere synthetische Silica, Glas (gemahlen oder in Form von Kugeln, Hohlkugeln oder Vollkugeln), Aluminiumoxide, Zinkoxide, Calciumcarbonate, Titandioxide, um nur einige zu nennen, Alterungsschutzmittel (primäre und sekundäre Antioxidantien, Lichtschutzmittel, Antiozonantien, Metalldesaktivatoren etc.). Abmischkomponenten umfassen ebenfalls Polymere, welche insbesondere Auswirkung auf die Ozonbeständigkeit der Blockcopolymere nehmen, wie z. B. Polyvinylacetate und Ethylen-Vinylacetat Copolymere.

Als **Diffusionssperrschichten** sind solche Materialien geeignet, welche eine für die jeweilige Anwendung ausreichende Diffusionsbarriere, für in benachbarten Klebfolienschichten enthaltenen migrierfähigen Rezepturbestandteilen, bilden. Bevorzugte Materialien beinhalten Barrierepolymere auf Basis teilkristalliner und amorpher Polyamide sowie Gemische beider (z. B. Ultramid 1 C und weitere Ultramide; BASF). Geeignet sind weiter Barrierepolymere auf Basis von Vinylidenchloridcopolymeren, Acrylnitrilcopolymere sowie Polyvinylalkohole und Ethylen-Vinylalkohol Copolymere.

Wie dargelegt, sind die erfindungsgemäß eingesetzten Klebharze vornehmlich mit dem elastischen Mittelblock verträglich und erzeugen damit die Haftklebrigkeit. Diese Verträglichkeit ermöglicht nicht nur eine gezielte Einstellung der Haftklebrigkeit, sondern auch die Steuerung der Glastemperatur der Elastomermatrix (Matrix ist hier immer die Elastomer-Harz-Phase, also die B-Blöcke zusammen mit den eingesetzten Klebharzen), welche die Haftklebrigkeit auch in Abhängigkeit von der Temperatur regelt. Letzteres ermöglicht auch Glastemperaturen nahe und oberhalb von Raumtemperatur und ist damit wichtig für thermisch aktivierbare Klebstoff-Folien.

Die erfindungsgemäßen Klebefolienstreifen bestehen aus wenigstens zwei, bevorzugt aus drei, wahlweise jedoch auch aus mehr als drei Schichten, welche optional durch Diffusionssperrschichten voneinander getrennt vorliegen können. Die einzelnen Schichten enthalten als elastomere Komponente die zuvor beschriebenen Styrolblockcopolymere ggf. in Abmischung auch weiterer Polymere. Unterschiedliche Schichten können identische oder auch unterschiedliche Styrolblockcopolymere in unterschiedlichen Einsatzkonzentrationen enthalten. Abmischkomponenten, welche im Gebrauchszeitraum der Klebstofflaminate keiner merklichen Migration unterliegen (Füllstoffe, Polymere), können in den einzelnen Schichten in unterschiedlichen Mengenanteilen vorhanden sein. Migrierfähige Rezepturbestandteile, wie z. B. Klebharze und Weichmacheröle sind in die einzelnen Schichten bevorzugt in derartigen Konzentrationen eingebaut, daß weniger als 25%, bevorzugt weniger als 15% und besonders bevorzugt weniger als 7,5% Konzentrationsänderung (bezogen auf die Gesamtinhaltsstoffe der jeweiligen Klebstoffschicht) je Rezepturbestandteil im Gebrauchszeitraum auftritt. Relative Änderungen der Konzentrationen einzelner Rezepturbestandteile (bezogen auf die Einsatzmenge des jeweils betrachteten Rezepturbestandteils in der jeweiligen Klebstoffschicht) liegen bei Einsatzkonzentrationen > 10 Gew.% bei weniger als 50% bevorzugt bei <30%, besonders bevorzugt bei < 20%. Konzentrationsänderungen lassen sich analytisch z. B. mittels Gelpermeationschromatographie oder auch durch NMR-Messungen bestimmen.

Die Verteilung der Harze auf Elastomerphase und Blockpolystyroldomänen kann analytisch z.B. über rheologische Untersuchungen an Gemischen der entsprechenden Styrolblockcopolymere und Klebharze mittels dynamisch mechanischer Spektroskopie (DMA) oder auch durch Ermittlung der statischen Glastemperatur (z.B. mittels Differentialcalorimetrie (DSC oder DTA)) als Funktion der Harzkonzentration ermittelt werden. Eine gute Abschätzung der Harzverteilung auf die Elastomerphase und die Blockpolystyroldomänen erlauben auch Trübungspunktmessungen in ausgewählten Lösungsmitteln // Lösungsmittelgemischen. Tabellenwerte hierzu werden von zahlreichen Harzherstellern zur Verfügung gestellt (siehe z.B. Selection Guide for Hercules Hydrocarbon Resins" der Firma Hercules). Reinaliphatische Kohlenwasserstoffharze sind mit den Blockpolystyroldomänen nahezu unverträglich. Bei Einsatz entsprechender Harze kann daher davon ausgegangen werden, daß sie ausschließlich in der Elastomerphase gelöst vorliegen. Entsprechend werden die Einsatzkonzentrationen dieser Harze bei Klebfolien, welche keine Diffusionssperrschichten enthalten, vorteilhaft so gewählt, daß für die einzelnen Schichten der erfindungsgemäßen Klebstoff-Folien das Verhältnis von Elastomerblock zu Aliphatenharz konstant (sh. auch Beispiel 6) ist. Kolophoniumharze sind gut mit der Elastomermatrix verträglich, jedoch teilweise ebenfalls mit den Blockpolystyroldomänen mischbar. Entsprechend kann als Startpunkt für eine Rezeptierung für Klebfolien, welche keine Sperrschichten enthalten, das Verhältnis von Gesamtstyrolblockcopolymergehalt und Harzgehalt zwischen den einzelnen Klebstoff-Folienschichten konstant gehalten werden. Im Falle des Einsatzes von Sperrschichten ist eine wesentlich breitere Variabilität der Einsatzkonzentration migrierfähiger Rezepturbestandteile in benachbarten Schichten möglich.

Die Dicke der Einzelschichten kann insbesondere zwischen 5µm und 3000µm liegen, die Gesamtdicke insbesondere zwischen ca 50 und 3000µm je nach Anwendung. Bevorzugte Schichtstärken für Dreischichtlaminate liegen zwischen 75µm und 2000µm für die Innenschicht und 15 bis 500µm für die Außenschichten.

Einzelne Klebstoffschichten können normaltackig (haftklebrig bei Raumtemperatur) sein oder auch wärmeaktivierbar, d. h. eine merkliche Anfaßklebrigkeit erst bei erhöhter Temperatur aufweisen.

Erfindungsgemäße Klebfolienstreifen ermöglichen gegenüber einschichtigen Systemen durch ihren Mehrschichtenaufbau deutlich erweiterte Einstellmöglichkeiten der Produkteigenschaften. Teilweise ergeben sich hierdurch völlig neuartige Produkteigenschaften. Adhäsive und kohäsive Eigenschaften der einzelnen Klebstoffschichten können durch Rezeptierung und Einstellung ihrer Dicke in weitem Umfang individuell gewählt werden. Insbesondere für die Mittelschichten ist der Einsatz einer breiten Palette nicht migrierfähigerAbmischkomponenten möglich, welche in einschichtigen Systemen infolge ihrer negativen Auswirkungen auf die adhäsiven Eigenschaften ausgeschlossen sind. Nachfolgend sind einige Produktvorteile mehrschichtiger Klebstoff-Folien im Vergleich zu Einschichtfolien gelistet.
- Im Gegensatz zu Einschichtsystemen erlauben Mehrschichtsysteme die Herstellung von Klebstoff-Folien mit differentiellen (unsymmetrischen) Klebeigenschaften. Hierdurch können Systeme realisiert werden, welche in ihren Klebeigenschaften auf die verwendeten Haftgründe bzgl. Verklebungsleistung und rückstandsfreier Wiederablösbarkeit optimal abgestimmt sind. Durch den Einsatz von Füllstoffen in einer Schicht einer zweischichtigen Klebstoff-Folie ist so z. B. eine gezielte Reduzierung der Adhäsion (Klebkraft) einer Klebfolienseite möglich. Durch Einsatz von Blockcopolymeren mit hohem Blockpolystyrolgehalt und/oder hoher Glasübergangstemperatur der Elastomerblöcke in einer Außenschicht lassen sich Systeme realisieren, welche einseitig normal haftklebrig sind (normal haftklebrig = bei Raumtemperatur haftklebrig), die zweite Klebfolienoberfläche jedoch erst nach Wärmeaktivierung ausreichenden Tack für eine gute Verklebung aufweist.
- Durch ausschließlichen Zusatz von Farbpigmenten zur Mittelschicht bei dreischichtigen Klebstoff-Folien oder einer der Mittelschichten bei mehr als dreischichtigen Klebfolienlaminaten ist es möglich, den Einfluß der Pigmente auf die adhäsiven Klebeigenschaften der Klebfolien weitgehend zu eliminieren. In vielen Fällen lassen sich hierdurch mehrschichtige Klebstoff-Folien erhalten, welche im Vergleich zu pigmentierten einschichtigen Klebstoff-Folien eine signifikante Steigerung der Verklebungsfestigkeiten, bei optisch nahezu identischem Erscheinungsbild der Klebfolien, ermöglichen.
- Durch Einsatz von Styrol-Ethylen/Butylen- oder Styrol-Ethylen/Propylen- oder Styrol-Butadienblockcopolymeren in der Mittelschicht und Styrol-Isopren-Styrol Blockcopolymeren in den Außenschichten lassen sich dreischichtige Klebstoff-Folien erhalten, welche durch eine hohe Adhäsion und durch eine geringe Reißemeigung beim Wiederablösen auch nach Ozonexposition gekennzeichnet sind.
- Zusätze von Polyvinylacetaten oder Ethylen-Vinylacetatcopolymeren oder verstärkender Füllstoffe, z. B. Silica (z. B. Aerosile) zu styrolblockcopolymerbasierenden Haftklebemassen bewirken im allgemeinen eine merkliche Reduktion der Anfaßklebrigkeit, verbessern jedoch die Ozonresistenz deutlich. Durch ausschließlichen Zusatz entsprechender Verbindungen zur Mittelschicht lassen sich ebenfalls Klebstoff-Folien erhalten, welche durch eine hohe Adhäsion und durch eine geringe Reißerneigung beim Wiederablösen auch nach Ozonexpositon gekennzeichnet sind.
- Durch Variation der Polymerkonzentration, des Zweiblockgehaltes, der Art des Elastomerblockes, des Blockpolystyrolgehaltes und der Molmasse der verwendeten Blockcopolymere sowie der Dicke einzelner Schichten lassen sich die mechanischen Eigenschaften der erfindungsgemäßen Klebstoff-Folien, insbesondere die Dehnspannung als Funktion des Verstreckungsgrades, in weitem Maße steuern. Hierdurch ist eine von den Deckschichten weitestgehend unabhängige Steuerung der Wiederablöseeigenschaften möglich. So lassen sich durch gezielte Variation des Blockpolystyrolgehaltes und/oder des Zweiblockgehaltes und/oder der Styrolblockcopolymermenge in der Mittelschicht und/oder der relativen Dicke der Deckschichten zur Mittelschicht, bei konstanter Gesamtdicke der Klebstoff-Folien die zum Ablösen erforderliche Kraft in weitem Umfang steuern. Durch Einsatz von Styrolblockcopolymeren mit hohem Zweiblockgehalt und/oder niedrigem Blockpolystyrolgehalt in der Mittelschicht und Verwendung von Styrolblockcopolymeren mit hohem Blockpolystyrolgehalt und/oder niedrigem Zweiblockgehalt in den Deckschichten lassen sich so z. B. dreischichtige Klebstoff-Folien realisieren, welche eine hohe Verklebungsfestigkeit und gleichzeitig eine niedrige Stripkraft aufweisen.
- Durch Verwendung sehr ozonbeständiger Styrolblockcopolymere in den Außenschichten lassen sich ozonresistente Mehrschichtfolien realisieren, welche als Mittelschicht auch wenig ozonbeständige Blockcopolymere nutzen. Bei Einsatz von z. B. SIS-Blockcopolymeren mit niedrigem Blockcopolymergehalt und/oder hohem Zweiblockgehalt für die Mittelschicht lassen sich so z. B. Klebstoff-Folien mit deutlich verbesserter Ozonresistenz realisieren, welche infolge der niedrigen Shore-Härte der Mittelschicht gleichzeitig eine hohe Anschmiegsamkeit an rauhe Haftgründe aufweisen.
- Durch Einsatz von Styrolblockcopolymeren mit hohem Dreiblock- und/oder hohem Blockpolystyrolgehalt in der ersten Schicht und hohem Zweiblockgehalt und/oder niedrigem Blockpolystyrolgehalt in der zweiten Schicht lassen sich Klebstoff-Folien mit verbesserter Thermoscherfestigkeit und einseitig hoher Haftklebrigkeit realisieren. Entsprechende Systeme sind insbesondere bei Verklebung auf Untergründen geeignet, welche Oberflächentemperaturen » Raumtemperatur aufweisen.

Erfindungsgemäße Klebfolienstreifen lassen sich insbesondere durch Lösemittelbeschichtung und durch Schmelzbeschichtung herstellen. Für Schichtstärken > ca 75µm ist die Schmelzbeschichtung aus ökonomischen Gründen meist vorzuziehen. Die Vereinigung mehrerer Schichten kann durch direkte Beschichtung oder durch Laminierung, insbesondere Heißlaminierung, erfolgen. Ein besonders bevorzugtes Herstellverfahren ist die Coextrusion, bei welcher die einzelnen Schichten in der Schmelze zusammengeführt werden und in Zwei- oder Mehrschichtcoextrusionsdüsen aufgetragen werden. Letzteres Verfahren ist besonders dann vorteilhaft einzusetzen, wenn es auf optimalen Verbund zwischen den einzelnen Klebstoffschichten ankommt. Die optional vorhandenen Sperrschichten werden bevorzugt ebenfalls durch Coextrusion erzeugt. Eine weitere bevorzugte Methode ist die Laminierung insbesondere die Heißlaminierung.

### Höchstzugkraft, Reißdehnung

Die Messungen erfolgen in Anlehnung an DIN 53504 mit Normprüfkörpern der Größe S 2 bei einer Zuggeschwindigkeit von 300mm/min.

### Klebkraft

Die Klebkraft wird entsprechend ASTM D 1000-82a durchgeführt. Der Abzugswinkel beträgt 90° oder 180°. Die doppelseitigen Klebstoff-Folien sind bei 180° Abzugswinkel einseitig mit einer 50µm starken Polyesterfolie (Hostaphan RN 50), bei 90° Abzugswinkel mit tesa pack 4588 verstärkt.

### Kippscherfestigkeit

Zur Bestimmung der Kippscherfestigkeit wird die zu prüfende Klebstoff-Folie der Abmessung 20mm * 50mm, welche an einem Ende beidseitig mit einem nicht haftklebrigen Anfasserbereich versehen ist (erhalten durch Aufkaschieren von 25µm starker biaxial verstreckter Polypropylenfolie), mittig auf eine hochglanzpolierte quadratische Stahlplatte der Abmessung 40mm * 40mm *3mm (Höhe * Breite * Dicke) verklebt. Die Stahlplatte ist rückseitig mittig mit einem 10cm langen Stahlstift versehen, welcher vertikal auf der Plattenfläche sitzt. Die erhaltenen Probekörper werden mit einer Kraft von 100N auf den zu prüfenden Haftgrund verklebt (Andruckzeit = 5sec) und 5 min im unbelasteten Zustand belassen. Nach Beaufschlagung der gewählten Kippscherbelastung durch Anhängen eines Gewichtes (Hebelarm und Masse des Gewichtes wählbar) wird die Zeit bis zum Versagen der Verklebung ermittelt.

### Ozonbeständigkeit

Der zu prüfende Klebfolienstreifen der Abmessung 50mm x 20mm (Höhe * Breite), welcher an einem Ende beidseitig, durch Aufkaschieren einer 25µm starken biaxial verstreckten PP-Folie, mit einem nicht haftklebrigen Anfasserbereich der Abmessung 12mm * 20mm (Höhe * Breite) versehen ist, wird derart zwischen zwei sich überlappende, in Längsrichtung parallel zueinander verschobenen Stahlplatten der Abmessungen 50mm x 30mm * 2mm (Länge * Breite * Dicke) verklebt, daß eine Überlappungsfläche von 20mm x 20mm entsteht. Die entstandene Verklebungsfläche beträgt aufgrund der in die Verklebung je ca. 2mm hineinragenden Anfasserfolie 18mm x 20mm. Die so hergestellten Probekörper werden für 144 h in einer auf 40°C temperierten und mit 50pphm Ozon angereicherten Prüfkammer einer Scherbelastung von 5N/18*20mm² ausgesetzt. Nach Rekonditionierung auf Raumtemperatur wird manuell geprüft, ob sich der Klebfolienstreifen ausgehend vom Anfasser, parallel zur Verklebungsfläche aus der Klebfuge herausziehen läßt. Die Lösegeschwindigkeit beträgt ca. 50mm/sec. Beurteilt wird, ob sich der Klebfolienstreifen rückstands- und reißerfrei vom Stahluntergrund löst.

### Ablösekraft (Stripkraft)

Zur Ermittlung des Ablöseverhaltens wird ein Prüfkörper hergestellt. Hierzu wird eine Klebstoff-Folie der Abmessungen 50mm * 20mm (Länge * Breite), mit am oberen Ende nicht haftklebrigem Anfasserbereich zwischen zwei Stahl- oder Kunststoffplatten A und A'(deckungsgenau zueinander angeordnet) der Abmessungen 50mm x 30mm verklebt. Die Stahl(Kunststoff)platten tragen an ihrem unteren Ende je eine Bohrung zur Aufnahme eines S-förmigen Stahlhakens. Das untere Ende des Stahlhakens trägt eine weitere Stahlplatte B.

Mit einer Zuggeschwindigkeit von 1000mm/min wird der Klebfolienstreifen parallel zur Verklebungsebene herausgelöst. Dabei wird die erforderliche Ablösekraft (Stripkraft) in N/cm gemessen und die Stahl(Kunststoff)platten auf Klebmasserückstände überprüft .

### Beispiel 1

Mehrschichtige Klebstoff-Folien wurden durch Lamination einschichtiger Primärfolien erhalten. Zur Herstellung der Primärfolien werden ca 30 g Masse in einer auf +110°C vorgeheizten Bucher-Guyer Presse (Typ: KHL 50) mit einer Kraft von 4000N bis 200000N über eine Zeit t=10min zu Folien verpreßt. Die erhaltenen Foliendicken liegen zwischen 50µm und 800µm. Mehrschichtige Klebstoff-Folien wurden durch Zusammenkaschieren der gewünschten Primärfolien mittels einer 2kg schweren und 20cm breiten Handrolle und nachfolgender nochmaliger Verpressung unter o. g. Bucher-Presse bei 40000N und 110°C erhalten. Realisierbar sind zwei-, drei- und vielschichtige Klebstoff-Folien.

Nachfolgende Zweischichtlaminate werden entsprechend der oben beschriebenen Methode angefertigt:

### Muster A

Klebstoffschicht A1 (Rezeptur 1a):
50 Teile Vector® 4211 (Dexco); 50 Teile Foral® 105-E (Hercules); 0,5 Teile Irganox® 1010 (Ciba)

Klebstoffschicht A2 (Rezeptur 1b):
50 Teile Vector® 4211; 50 Teile Foral® 105-E; 20 Teile Mikrotalkum (Micro-Talc IT-EXTRA; Norwegian Talc) 0,5 Teile Irganox® 1010

### Muster B

Klebstoffschicht B1 (Rezeptur 1c):
50 Teile Vector® 4114; 50 Teile Foral® 105-E; 0,5 Teile Irganox® 1010

Klebstoffschicht B2 (Rezeptur 1d):
50 Teile Kraton® D 1107; 50 Teile Foral® 105-E; 0,5 Teile Irganox® 1010

Nachfolgende technische Eigenschaften wurden ermittelt:

| Muster Nr. | Aufbau | Klebstoffschicht 1 | Klebstoffschicht 2 | Klebkraft Stahl; 180° Seite 1 // Seite 2 |
|---|---|---|---|---|
| 1A | Zweischicht | A1 430µm | A2 410µm | 27 N/cm // 19 N/cm |
| 1B | Zweischicht | B1 400µm | B2 430µm | 48 N/cm // 28 N/cm |

| Muster Nr. | Stripkraft |
|---|---|
| 1A | 9,4 N/cm (Polystyrol; 1000 mm/min Separationsbeständigkeit) |
| 1B | 4,4 N/cm (Polystyrol; 1000 mm/min Separationsbeständigkeit) |

Durch Veränderung des verwendeten Elastomertyps und der eingesetzten Füllstoffmenge ist eine individuelle Variation der Klebkräfte der einzelnen Klebstoff-Folienoberflächen möglich und damit eine optimale Anpassung der Klebkräfte an die jeweils genutzten Haftgründe.

### Beispiel 2

Nachfolgendes Dreischichtlaminat wird entsprechend der unter Beispiel 1 beschriebenen Methode angefertigt:

Deckschichten (Rezeptur 2a):
50 Teile Vector® 4211; 50 Teile Foralyn® 110 (Hercules); 0,5 Teile Irganox® 1010

Mittelschicht (Rezeptur 2b):
50 Teile Vector® 4211; 50 Teile Foralyn® 110; 0,5 Teile Irganox® 1010; 5 Teile Kronos® 2160

Die Deckschichtdicken des Dreischichtlaminates betragen je 100µm, die der Mittelschicht beträgt 440µm, so daß sich eine Gesamtdicke des Klebfolienlaminates von 640µm ergibt. Zum Vergleich werden einschichtige Klebfolien der Rezepturen 2a und 2b entsprechender Dicke hergestellt.

Die Klebfolien (Muster Nr. 2A, 2B) werden einer Kippscherfestigkeitsprüfung unterzogen (Hebelarm = 90mm, Kippscherlast = 20N, T = 23°C, 50±5% rel. Feuchte). Es ergeben sich nachfolgende Eigenschaften:

| Muster Nr. | Aufbau | Deckschichten | Mittelschicht | Kippscherstandzeit* | Aussehen |
|---|---|---|---|---|---|
| 2A | Einschicht | - | 2a 650µm> | 8 Tage | transparent |
| 2B | Einschicht | - | 2b 650µm | < 1 Tage | weiß |
| 2C | Dreischicht | 2a je 100µm | 2b 440µm | > 8 Tage | weiß |

| | | | | | |
|---|---|---|---|---|---|
| *90 mm Hebelarm, 20 N Scherlast; Mittelwerte | | | | | |

Die Verklebungsfestigkeit (Kippscherfestigkeit) läßt sich durch gezielten Einsatz der Haftklebmasse der Außenschichten, das optische Erscheinungsbild durch Pigmentierung der Innenschicht einstellen.

### Beispiel 3

Nachfolgendes Dreischichtlaminat wird entsprechend der unter Beispiel 1 beschriebenen Methode angefertigt:

Deckschichten (Rezeptur 3a):
50 Teile Vector® 4211; 50 Teile Foral® 105-E; 0,5 Teile Irganox® 1010; 3 Teile Kronos® 2160 (Kronos Titan)

Mittelschicht (Rezeptur 3b):
50 Teile Vector® 8508; 50 Teile Foral® 105-E; 0,5 Teile Irganox® 1010; 3 Teile Kronos® 2160

Die Deckschichtdicken betragen je 100µm, die der Mittelschicht beträgt 500µm, so daß sich eine Gesamtdicke des Klebfolienlaminates von 700µm ergibt. Zum Vergleich werden einschichtige Klebfolien der Rezepturen 3a und 3b entsprechender Dicke hergestellt.

Die Dreischichtlaminate (Muster Nr. 3C) und einschichtigen Klebstoff-Folien der Rezepturen 3a und 3b (Muster Nr. 3A, 3B) werden einer vergleichenden Ozonbeständigkeitsprüfung unterzogen. Geprüft werden je Produktaufbau 5 Klebfolienmuster. Es ergeben sich nachfolgende Eigenschaften:

| Muster Nr. | Aufbau | Deckschichten | Mittelschicht | Ozonbeständigkeit |
|---|---|---|---|---|
| 3A | Einschicht | - | 3a 700µm | Muster gerissen |
| 3B | Einschicht | - | 3b 700µm | reißerfrei wiederablösbar |
| 3C | Dreischicht | 3a je 100µm | 3b 440µm | reißerfrei wiederablösbar |

| Muster Nr. | Klebkraft 180° |
|---|---|
| 3A | 34 N/cm |
| 3B | 24 N/cm |
| 3C | 28 N/cm |

Im Gegensatz zu Muster Nr. 3A ist das entsprechende Dreischichtlaminat 3C nach Ozonexposition reißerfrei wiederablösbar.

### Beispiel 4

Nachfolgendes Dreischichtlaminat wird entsprechend der unter Beispiel 1 beschriebenen Methode angefertigt:

Deckschichten (Rezeptur 1a):
50 Teile Vector® 4211; 50 Teile Foral® 105-E; 0,5 Teile Irganox®1010

Mittelschicht (Rezeptur 4a):
50 Teile Kraton® G 1652; 50 Teile Foral® 105-E; 0,5 Teile Irganox® 1010

Die Deckschichtdicken betragen je 125µm, die der Mittelschicht beträgt 410µm, so daß sich eine Gesamtdicke des Klebfolienlaminates (Muster Nr. 4C) von 660µm ergibt. Zum Vergleich werden einschichtige Klebfolien der Rezepturen 1a und 4a (Muster Nr. 4A, 4B) entsprechender Dicke hergestellt.

Die Klebfolien werden einer Ozonbeständigkeitsprüfung unterzogen. Geprüft werden je Produktaufbau 5 Klebfolienmuster. Die reine SEBS-Mittelschicht ist lediglich blockend, weist jedoch für eine gute Verklebungsfestigkeit unter anwendungsgerechten Anpreßdrucken keine ausreichende Anfaßklebrigkeit auf. Sie konnte daher bei der Ozonbeständigkeitsprüfung nicht berücksichtigt werden.

| Muster Nr. | Aufbau | Deckschichten | Mittelschicht | Ozonbeständigkeit |
|---|---|---|---|---|
| 4A | Einschicht | - | 1a 650µm | Muster gerissen |
| 4B | Einschicht | - | 4a 640µm | nicht durchführbar (s.o.) |
| 4C | Dreischicht | 1a je 125µm | 4a 410µm | reißerfrei wiederablösbar |

| Muster | Klebkraft |
|---|---|
| Nr. | 180° |
| 4A | 27 N/cm |
| 4B | Messung nicht möglich (s. o.) |
| 4C | 22 N/cm |

Im Vergleich zu Muster Nr. 4A ist das Dreischichtlaminat 4C nach Ozonexposition reißerfrei wiederablösbar.

### Beispiel 5

Nachfolgendes Dreischichtlaminat wird entsprechend der unter Beispiel 1 beschriebenen Methode angefertigt:

Deckschichten (Rezeptur 1a):
50 Teile Vector® 4211; 50 Teile Foral® 105-E; 0,5 Teile Irganox® 1010

Mittelschicht (Rezeptur 5a):
40 Teile Vector® 4211; 50 Teile Foral® 105-E; 10 Teile Elvax® 170; 0,5 Teile Irganox® 1010

Die Deckschichtdicken betragen je 125 µm, die der Mittelschicht beträgt 450 µm, so daß sich eine Gesamtdicke des Klebfolienlaminates von 700 µm ergibt. Zum Vergleich werden einschichtige Klebfolien der Rezepturen 1a und 5a entsprechender Dicke hergestellt.

Die Klebfolien werden einer Ozonbeständigkeitsprüfung unterzogen. Geprüft werden je Produktaufbau 5 Klebfolienmuster. Die Elvax® 170 enthaltende einschichtige Klebstoff-Folie ist deutlich blockend, weist jedoch für eine gute Verklebungsfestigkeit unter anwendungsgerechten Anpreßdrucken keine ausreichende Anfaßklebrigkeit auf und wurde daher bei der Ozonbeständigkeitsprüfung nicht berücksichtigt. Muster Nr. 5B weist nur eine sehr geringe Anfaßklebrigkeit auf. Eine Prüfung auf Ozonbeständigkeit ist daher nicht möglich.

| Muster Nr. | Aufbau | Deckschichten | Mittelschicht | Ozonbeständigkeit |
|---|---|---|---|---|
| 5A | Einschicht | - | 1a 650µm | Muster gerissen |
| 5B | Einschicht | - | 5a 620µm | nicht durchführbar (s.o.) |
| 5C | Dreischicht | 1a je 125µm | 5a 450µm | reißerfrei wiederablösbar |

Im Vergleich zu Muster Nr. 5A ist das Dreichichtlaminat 5C nach Ozonexposition reißerfrei wiederablösbar.

### Beispiel 6

Nachfolgende Ein- und Dreischichtlaminate werden entsprechend der unter Beispiel 1 beschriebenen Methode angefertigt:

Rezepturen der verwendeten Haftklebemassen

| Rezeptur | Elastomer | Harz Öl | |
|---|---|---|---|
| 6a | 44,0 Teile Vector® 4114 | 44,5 Teile ECR® 385 | 10 Teile Ondina® G 41 |
| 6b | 48,4 Teile Vector® 4411 | 40,9 Teile ECR® 385 | 9,2 Teile Ondina® G 41 |

Beide Klebmassen enthalten 0,5 Teile Irganox 1010 als Alterungsschutzmittel

Aufbau und ausgewählte technische Daten der einschichtigen Klebstoff-Folien und der Dreischichtlaminate:

| Muster Nr. | Aufbau | Deckschichten | Mittelschicht | Stripkraft |
|---|---|---|---|---|
| 6A | Dreischicht | 6a je 50µm | 6b 120µm | 6,2 N/cm |
| 6B | Dreischicht | 6a je 55µm | 6b 210µm | 7,7 N/cm |
| 6C | Dreischicht | 6a je 50µm | 6b 410µm | 15 N/cm |
| 6D | Dreischicht | 6b je 60µm | 6a 410µm | 2,7 N/cm |
| 6E | Einschicht | - | 6a 390µm | 1,8 N/cm |
| 6F | Einschicht | - | 6b 420µm | 4,3 N/cm |

Durch Variation der Reihenfolge der Klebstoffschichten sowie der Dicke der Mittelschicht ist eine breite Variation und gezielte Steuerung der Stripkräfte möglich.

### Beispiel 7

Nachfolgende Ein- und Dreischichtlaminate werden entsprechend der unter Beispiel 1 beschriebenen Methode angefertigt:

Rezepturen der verwendeten Haftklebemassen

| Rezeptur | Elastomer | Harz | Alterungsschutz |
|---|---|---|---|
| 7a | 50 Teile Vector® 4411 | 50 Teile Foral® 105-E | 0,5 Teile Irganox® 1010 |
| 1c | 50 Teile Vector® 4114 | 50 Teile Foral® 105-E | 0,5 Teile Irganox® 1010 |

Aufbau und ausgewählte technische Daten der einschichtigen Klebstoff-Folien und der Dreischichtlaminate:

| Muster Nr. | Aufbau | Deckschichten | Mittelschicht | Stripkraft | Klebkraft 180° |
|---|---|---|---|---|---|
| 7A | Dreischicht | 7a je 130µm | 1c 500µm | 8 N/cm | 9 N/cm |
| 7B | Einschicht | | 7a 700µm | 14 N/cm | 6 N/cm |
| 7C | Einschicht | | 1c 800µm | 3 N/cm | 46 N/cm |

| Muster Nr. | Aufbau | Kippscherstandzeit | Verklebungsfläche auf Fiber Line* |
|---|---|---|---|
| 7A | Dreischicht | >30 h | 50 % |
| 7B | Einschicht | >30 h | 30 % |
| 7C | Einschicht | 5 h | 100 % |

| | | | |
|---|---|---|---|
| * Andruckzeit = 10 sec; Anpreßdruck = 50N / 200 mm²; Fiber Line = Strukturtapete definierter Oberflächenrauhigkeit (Firma Kunststoff-Krüger, Hamburg). | | | |

Durch Art und Dicke der verwendeten Mittelschicht ist eine gezielte Steuerung der Stripkraft möglich. Durch Einsatz von Klebstoff-Folienlaminaten mit weicheren Mittelschichten (hier erreicht durch den niedrigeren Blockpolystyrolgehalt) läßt sich eine signifikante Reduzierung der Stripkräfte erreichen (im Vergleich zur einschichtigen Klebstoff-Folie gleicher Dicke bestehend aus reinem Deckschichtmaterial) und damit sehr anwenderfreundliche Ablöseeigenschaften realisieren.

Gleichzeitig wird durch die weichere Mittelschicht eine Steigerung der Verklebungsfläche erreicht, welches insbeosndere auf rauhen Haftgründen zu einer Verbesserung der Verklebungsfestigkeit führen kann.

### Beispiel 8

Nachfolgendes Ein- und Dreischichtlaminate werden entsprechend der unter Beispiel 1 beschriebenen Methode angefertigt:

Rezepturen der verwendeten Haftklebemassen:

| Rezeptur | Elastomer | Harz | Alterungsschutz |
|---|---|---|---|
| 4a | 50 Teile Kraton® G 1652 | 50 Teile Foral® 105-E | 0,5 Teile Irganox® 1010 |
| 1c | 50 Teile Vector® 4114 | 50 Teile Foral® 105-E | 0,5 Teile Irganox® 1010 |

Aufbau und ausgewählte technische Daten der einschichtigen Klebstoff-Folien und der Dreischichtlaminate:

| Muster Nr. | Aufbau | Deckschichten | Mittelschicht | Stripkraft* | Klebkraft* 180°* |
|---|---|---|---|---|---|
| 7A* | Dreischicht | 4a je 130 µm | 1c 450 µm | 4,9 N/cm | 2 N/cm |
| 7B* | Einschicht | | 4a 700 µm | 7,0 N/cm | 3 N/cm |
| 7C* | Einschicht | | 1c 800 µm | 3,2 N/cm | 46 N/cm |
| Muster Nr. 7A und 7B bei Raumtemperatur nicht haftklebrig | | | | | |

| | | | | | |
|---|---|---|---|---|---|
| *Musterverklebung: Entsprechend ASTM D 1000-82a bei Raumtemperatur | | | | | |

| Muster Nr. | Aufbau | Kippscherstandzeit** | Stripkraft II** | Klebkraft II** |
|---|---|---|---|---|
| 7A** | Dreischicht | > 14 d | 12 N/cm | 40 N/cm |
| 7B** | Einschicht | > 14 d | 19 N/cm | 29 N/cm |
| 7C** | Einschicht | 5 h | 3 N/cm | 46 N/cm |

| | | | | |
|---|---|---|---|---|
| **Musterverklebung: Entsprechend ASTM D 1000-82a sowie zusätzlich 45 min Lagerung der Probekörper bei +70°C im Trockenschrank. Dicken der Mittel- und Deckschichten identisch mit Muster Nr 7A bis 7C. | | | | |

Eine ausreichende Verklebungsfestigkeit wird für Muster Nr. 7A und 7B nur nach vorheriger thermischer Initiierung erreicht. Anwendungsgerechte Stripkräfte sind in diesem Fall bei gleichzeitig hoher Verklebungsfestigkeit ausschließlich mit dem Dreischichtlaminat möglich.

### Beispiel 9

Dreischichtfolie mit Mittelschicht von niedriger und Außenschicht von hoher Ozonresistenz.

Nachfolgendes Dreischichtlaminat wird entsprechend der unter Beispiel 1 beschriebenen Methode angefertigt und im Vergleich zur einschichtigen Klebstoff-Folie Muster Nr. 9B untersucht:
Deckschichten (Rezeptur 9a):
   50 Teile Vector® 8508; 50 Teile Foral® 105-E; 0,5 Teile Irganox® 1010
Mittelschicht (Rezeptur 1b):
   50 Teile Vector® 4211; 50 Teile Foral® 105-E; 0,5 Teile Irganox® 1010

Aufbau und ausgewählte technische Daten der einschichtigen Klebstoff-Folien und der Dreischichtlaminate:

| Muster Nr. | Aufbau | Deckschichten | Mittelschicht | Ozonbeständigkeit |
|---|---|---|---|---|
| 9A | Dreischicht | 9a je 120 µm | 1b 510 µm | reißerfrei wiederablösbar |
| 9B | Einschicht | | 9a 450 µm | reißerfrei wiederablösbar |
| 9C | Einschicht | | 1b 700 µm | Muster gerissen |

| Muster Nr. | Aufbau | KK Stahl 180° |
|---|---|---|
| 9A | Dreischicht | 26 N/cm |
| 9B | Einschicht | 20 N/cm |
| 9C | Einschicht | 27 N/cm |

Im Gegensatz zu Muster 9C läßt sich das Dreischichtlaminat nach Ozonexposition reißerfrei wiederablösen.

### Beispiel 10

Dreischichtige Klebstoff-Folie mit zwischen den einzelnen Klebstoffschichten liegenden Diffusionssperrschichten.

Primärfolien auf Basis nachfolgender Rezepturen werden entsprechend Bspl. 1 gefertigt:

| Rezeptur | Dicke | |
|---|---|---|
| 1a | 120µm | für die Deckschcihten |
| 10b* | 400µm | für die Mittelschicht |

| | | |
|---|---|---|
| * 10b : 45 Tle Vector® 4211; 45 Tle ECR®373 (Exxon), 10 Tle Ondina® G 41 (Shell), 0,5 Tle Irganox® 1010 | | |

12 µm starke Diffusionssperrschichten wurden durch Trocknen einer Ethanol-Wasser (80 Vol.-Teile zu 20 Vol.-Teile) Lösung von Ultramid® 1 C (BASF) auf silikonisiertem Trennpapier gewonnen. Die Sperrschichten lassen sich durch Aufrollen auf die entsprechenden Deckschichten (Rezeptur 1a) mittels einer 2 kg schweren und 20 cm breiten Handrolle auf die späteren Deckschichten transferieren. Die Laminierung der so modifizierten Deckschichten auf die Klebfolienmittelschicht (Rezeptur 10b) erfolgt entsprechend. Das resultierende Mehrschichtenlaminat wird entsprechend Bspl. 1 bei 40000 N und 110°C unter der zuvor beschriebenen Bucher-Guyer Presse verpreßt.

Die erhaltenen Klebstoff-Folien lassen sich rückstands- und zerstörungsfrei zwischen mit ihrer Hilfe verklebten Blättern weißen Schreibpapieres (Flächengewicht: 80 g/m²) durch Verstrecken im wesentlichen in der Verklebungsebene herauslösen. Auch nach 4-wöchiger Lagerung entsprechend verklebter Papiere bei +40°C ist keine Migration des in der Mittelschicht verwendeten Weichmachers Ondina G 41 in das Papier nachzuweisen.

## Patentansprüche

1. Klebfolienstreifen für eine wieder lösbare Verklebung, der sich durch Ziehen in Richtung der Verklebungsebene rückstandsfrei und beschädigungslos ablösen läßt, mit einem Schichtaufbau aus einer elastischen Trägerschicht, die einseitig oder beidseitig mit einer Klebstoffschicht versehen ist, **dadurch gekennzeichnet, daß** sowohl die Trägerschicht als auch die Klebstoffschicht(en) als Basispolymere Styrolblockcopolymere enthalten, abgemischt mit Klebharzen, welche mit dem Elastomerblock der verwendeten Styrolblockcopolymeren verträglich sind.

2. Klebfolienstreifen nach Anspruch 1, **dadurch gekennzeichnet, daß** die Trägerschicht und die Klebstoffschicht(en) die selben Klebharze, Weichmacheröle und dergleichen enthalten.

3. Klebfolienstreifen nach Anspruch 1, **dadurch gekennzeichnet, daß** die Mengenanteile der Styrolblockcopolymeren in der Trägerschicht und der/den Klebstoffschicht(en) 15-75 Gew.-% betragen, und die Mengenanteile der Klebharze in diesen Schichten 15 - 75 Gew.-% betragen.

4. Klebfolienstreifen nach Anspruch 1, dadurch gekennzeichent, daß daß es sich bei den Klebharzen um Kolophonium oder seine Derivate, aliphatische oder aromatenmodifizierte aliphatische Klebharze, insbesondere um Ester von teilhydriertem Kolophonium mit Erweichungspunkten von + 70 bis + 125°C oder für thermisch aktivierbare Systeme um Kolophoniumderivate mit Erweichungspunkten bis zu + 160°C handelt.

5. Klebfolienstreifen nach Anspruch 1, **dadurch gekennzeichnet, daß** weitere Abmischkomponenten in der Trägerschicht und der/den Klebstoffschicht(en) enthalten sind, insbesondere Weichmacher, Flüssigharze, Füllstoffe, Alterungsschutzmittel und/oder weitere Polymere.

6. Klebfolienstreifen nach Anspruch 6, **dadurch gekennzeichnet, daß** die Mengenanteile der weiteren Abmischkomponenten in der Trägerschicht und der/den Klebstoffschicht(en) bis zu 40 Gew.-% betragen.

7. Klebfolienstreifen nach Anspruch 6, **dadurch gekennzeichnet, daß** die Trägerschicht und die Klebstoffschicht(en) die selben migrierfähigen Abmischkomonenten enthalten.

8. Klebfolienstreifen nach Anspruch 1, **dadurch gekennzeichnet, daß** die Trägerschicht beidseitig mit einer Klebstoffschicht versehen ist.

9. Klebfolienstreifen nach Anspruch 1, **dadurch gekennzeichnet, daß** er an einem seiner Enden einen Anfasser zum Ziehen in Richtung der Verklebungsebene aufweist.

10. Klebfolienstreifen nach Anspruch 1, **dadurch gekennzeichnet, daß** seine Klebstoffschicht(en) durch Abdeckpapier oder -folie geschützt ist.

11. Klebfolienstreifen nach Anspruch 1, **dadurch gekennzeichnet, daß** zwischen Trägerschicht und Klebstoffschicht(en) Diffusionssperrschicht(en) vorgesehen sind.

12. Verwendung eines Klebstoffs nach Anspruch 1 zum rückstandsfrei wiederlösbaren Verkleben durch Ziehen in Richtung der Verklebungsebene.

## Claims

1. Adhesive film strip for a temporary bond which can be detached without residue and without damage by pulling in the direction of the bond plane, having a layer structure comprising an elastic backing layer which is provided on one or both sides with an adhesive layer, **characterized in that** both the backing layer and the adhesive layer(s) comprise styrene block copolymers as base polymers, blended with tackifier resins which are compatible with the elastomer block of the styrene block copolymers used.

2. Adhesive film strip according to Claim 1, **characterized in that** the backing layer and the adhesive layer(s) comprise the same tackifier resins, plasticizer oils and the like.

3. Adhesive film strip according to Claim 1, **characterized in that** the proportions of the styrene block copolymers in the backing layer and in the adhesive layer(s) are 15-75% by weight, and the proportions of the tackifier resins in these layers are 15-75% by weight.

4. Adhesive film strip according to Claim 1, **characterized in that** that [sic] the tackifier resins are rosin or its derivatives, aliphatic or aromatic-modified aliphatic tackifier resins, especially esters of partially hydrogenated rosin having softening points of from +70 to 125°C or, for heat-activatable systems, are rosin derivatives having softening points of up to +160°C.

5. Adhesive film strip according to Claim 1, **characterized in that** further blend components are present in the backing layer and in the adhesive layer(s), especially plasticizers, liquid resins, fillers, antiageing agents and/or further polymers.

6. Adhesive film strip according to Claim 6 [sic], **characterized in that** the proportions of the further blend components in the backing layer and in the adhesive layer(s) are up to 40% by weight.

7. Adhesive film strip according to Claim 6, **characterized in that** the backing layer and the adhesive layer(s) comprise the same migratable blend components.

8. Adhesive film strip according to Claim 1, **characterized in that** the backing layer is provided on both sides with an adhesive layer.

9. Adhesive film strip according to Claim 1, **characterized in that** at one of its ends it has a grip tab for pulling in the direction of the bond plane.

10. Adhesive film strip according to Claim 1, **characterized in that** its adhesive layer(s) is (are) protected by cover paper or cover film.

11. Adhesive film strip according to Claim 1, **characterized in that** diffusion barrier layer(s) is (are) provided between backing layer and adhesive layer(s).

12. Use of an adhesive according to Claim 1 for residue-free temporary adhesive bonding by pulling in the direction of the bond plane.

## Revendications

1. Ruban de feuilles adhésives pour un collage à nouveau détachable, qui se laisse détacher, sans laisser de résidus et sans causer de dommages, par traction dans la direction du plan de collage, ayant une structure de couches faite d'une couche de support élastique, qui est pourvue, sur une ou deux faces, d'une couche adhésive, **caractérisé en ce que** non seulement la couche de support, mais aussi la ou les couches adhésives contiennent, en tant que polymères de base, des copolymères séquencés du styrène, mélangés à des résines adhésives, qui sont compatibles avec le bloc élastomère des copolymères séquencés du styrène utilisés.

2. Ruban de feuilles adhésives selon la revendication 1, **caractérisé en ce que** la couche de support et la ou les couches adhésives contiennent les mêmes résines adhésives, des huiles plastifiantes et des produits similaires.

3. Ruban de feuilles adhésives selon la revendication 1, **caractérisé en ce que** les proportions quantitatives des copolymères séquencés du styrène dans la couche de support et dans la ou les couches adhésives sont de 15 - 75 % en poids et **en ce que** les proportions quantitatives des résines adhésives dans ces couches sont de 15 - 75 % en poids.

4. Ruban de feuilles adhésives selon la revendication 1, **caractérisé en ce qu'**il s'agit, dans le cas des résines adhésives, de colophane ou de ses dérivés, de résines adhésives aliphatiques ou aliphatiques modifiées par des aromates, en particulier d'esters du colophane partiellement hydrogéné, ayant des points de ramollissement de +70 à +125°C ou, pour des systèmes que l'on peut activer par voie thermique, de dérivés du colophane ayant des points de ramollissement allant jusqu'à +160°C.

5. Ruban de feuilles adhésives selon la revendication 1, **caractérisé en ce que** des composants de mélange supplémentaires sont contenus dans la couche de support et dans la ou les couches adhésives, en particulier des plastifiants, des résines fluides, des charges, des agents de protection contre le vieillissement et/ou des polymères supplémentaires.

6. Ruban de feuilles adhésives selon la revendication 5, **caractérisé en ce que** les proportions quantitatives des composants de mélange supplémentaires dans la couche de support et dans la ou les couches adhésives vont jusqu'à 40 % en poids.

7. Ruban de feuilles adhésives selon la revendication 6, **caractérisé en ce que** la couche de support et la ou les couches adhésives contiennent les mêmes composants de mélange capables de migration.

8. Ruban de feuilles adhésives selon la revendication 1, **caractérisé en ce que** la couche de support est pourvue, sur les deux faces, d'une couche d'adhésif.

9. Ruban de feuilles adhésives selon la revendication 1, **caractérisé en ce qu'**il présente, sur une de ses extrémités, une languette de prise pour la traction dans la direction du plan de collage.

10. Ruban de feuilles adhésives selon la revendication 1, **caractérisé en ce que** sa ou ses couches adhésives est (sont) protégée(s) d'un papier où d'une feuille de recouvrement.

11. Ruban de feuilles adhésives selon la revendication 1, **caractérisé en ce que** l'on prévoit, entre la couche de support et la ou les couches adhésives, une ou des couches de blocage de la diffusion.

12. Utilisation d'un adhésif selon la revendication 1, en vue du collage à nouveau détachable sans laisser de résidus, par traction en direction du plan de collage.
